# EUROPEAN PATENT APPLICATION

(11) **EP 0 598 882 A1**
(43) Date of publication of application: **01.06.1994**
(21) Application number: 93913029.0
(22) Date of filing: 16.06.1993
(51) Int. Cl.: B60J 3/02

(54) **DEVICE FOR FIXING SUN VISORS OF MOTOR VEHICLES**

(30) Priority: 24.06.1992 ES 9201316
(71) Applicant: FICO I.T.M., S.A., E-08027 Barcelona (ES)
(72) Inventor: AYMERICH MUNOZ, José, E-08191 Rubi (ES); PRAT CASTAN, Jesús, E-08191 Rubi (ES)
(74) Representative: SUGRANES - VERDONCES - FERREGÜELA
(86) International application number: ES9300050
(87) International publication number: WO9400312

(57) **Abstract**

The fixing device is comprised of a base body (1) fixed to the structure of the vehicle and a support axis (2) shaped with an elbow and whose vertical (7) and horizontal (8) arms are coupled to the base body (1) and to a sun visor, respectively. The base body (1) has, in its internal face (I), an extension-guide (3) wherein is arranged an axial orifice (5) provided with a longitudinal positioning groove (12). The vertical arm (7) of the support axis (2) has a portion (10) which is housed with a tight fit relationship in the above-mentioned axial orifice (5) and which is provided with a longitudinal clamping rib (11). The rotation of the vertical arm (7) causes the insertion or removal of the clamping rib (11) in the coupling groove (12) or the elastic deformation of the extension-guide (3) of the base body (1), thereby obtaining a high resistant turning torque which provides for the positioning of the support axis (2) and of the sun visor to which it is coupled. Application to the car industry.

## Description

### Field of the Invention

The object of the present invention is a fixing device for automobile sun visors which, in particular, is for setting the position of the sun visor as selected by the user.

### Background of the Invention

As is generally known, the sun visors normally fitted as original equipment in automobiles are coupled to a support pin which associates them with a base body firmly attached to the vehicle structure. Said support pin is bent, i.e. it is approximately L-shaped, providing the sun visor with two axes of rotation around which it may be rotated and which allow it to occupy, among the regular positions of use, any position selected by the user. The said two axes of rotation correspond with the two arms of the support pin in such a way that, with regard to the regular position of use, the vertical arm is attached to the base body while the sun visor is attached to the horizontal arm. These couplings are made in such a way that the sun visor may be rotated simultaneously and independently around the base body attached to the vehicle structure, by means of the vertical arm of the support pin, which may be called a translational movement, and around the horizontal arm of the support pin, making a movement which may be called rotational.

The above described couplings of the vertical arm of the support pin to the base body and of the sun visor to the horizontal arm comprise respective means the purpose of which is to prevent the sun visor from coming out of the position selected by the user under normal conditions of use, particularly due to the vibration caused by the vehicle when running.

The known embodiments of coupling of the vertical arm of the sun visor to the base body attached to the vehicle structure comprise, in general, the following means: on the base body, a guide extension provided with a circular section axial orifice; and, on the vertical arm of the support pin, a cylindrical portion dimensioned in such a way as to be snugly housed in said axial orifice. The said embodiments of coupling of the vertical arm of the support pin to the base body suffer from the main drawback that, under certain conditions, mainly due to the variations of temperature which may affect the base body and the support pin caused by sun radiation, the setting of the coupling of the vertical arm of the support pin to the body may become loose and become a slack fit. From that time, the vertical arm of the support pin can rotate freely about itself and, consequently, the sun visor may rotate uncontrolledly around the base body under the inertia of the movement of the vehicle when running, which is obviously a serious drawback. Consequently, these known embodiments are incapable of stably maintaining the position of lateral protection, i.e. the position in which the sun visor is located close to or in contact with the immediately adjacent side window, for which purpose it has effected a translational movement from the regular position facing the running direction of the vehicle, to the said position approximately perpendicular to the running direction, as said above. To effect these return translational movements, the vertical arm of the support pin rotates inside its housing, i.e. inside the axial orifice of the base body.

### Summary of the Invention

To provide a solution to the above described problems from which the known embodiments of coupling of the vertical arm of the support pin with the base body attached to the vehicle structure may suffer under certain conditions, a fixing device for automobile sun visors is disclosed.

The fixing device of the invention comprises a base body and a bent support pin which are mutually engageable through coupling means and retaining means with which they are respectively provided, said base body and support pin being made from materials of appropriate strength and resilience.

The shape and finish of the base body depend on the interior finish of the automobile passenger compartment and it is provided with means for firm attachment to the vehicle structure. And the vertical and horizontal arms of the support pin are of different length, the vertical arm being shorter and attached to the base body.

The coupling means for the vertical arm of the support pin to the base body comprises, on the inner surface of the base body which is the surface facing the vehicle structure, a guide extension forming an angle with said surface and which is provided with a circular section axial through orifice and, on the vertical arm of the support pin, a cylindrical portion dimensioned to mate with said axial orifice, in which it is snugly housed. The retaining means on the vertical arm of the support pin and the base body is to prevent the vertical arm from coming loose from the base body under normal conditions of use when they are coupled together.

The fixing device of the invention is characterized in that it comprises, on the cylindrical portion of the support pin vertical arm, a longitudinal gripping rib and, in the axial through orifice of the base body guide extension, a longitudinal coupling slot in which said gripping rib of the support pin vertical arm cylindrical section may be snugly housed.

The above described features of the fixing device of the invention provide a solution to the problems of positional instability which may arise with the known embodiments of coupling of the support pin vertical arm to the base body under certain conditions. In fact, should said coupling become slack when the gripping rib of the support pin vertical arm is housed in the coupling slot of the base body guide extension, to change the position of the sun visor the user must apply to the sun visor a rotational torque sufficient to remove said gripping rib from its housing in the coupling slot. This torque is greater, in any case, than the inertial rotational torque that may be applied to the sun visor by the running conditions of the vehicle and which, as may happen with the known embodiments of support pin-base body attachments, would cause the vertical arm to come out of the position selected by the user. Furthermore, the gripping rib is dimensioned so that, when it has been moved by the user from its location in the coupling slot to another position, said gripping rib causes the resilient deformation of the base body guide extension, whereby the latter, by resilient reaction, substantially increases its gripping action on the support pin vertical arm cylindrical section. In both cases, i.e. both when the gripping rib is housed in the coupling slot and when the gripping rib is causing the resilient deformation of the guide extension, there is achieved a very high stability of the position occupied by the support pin vertical arm and, consequently, by the sun visor relative to the base body.

Preferably, the position of the support pin vertical arm in which its gripping rib is housed in the base body guide extension coupling slot is the same as the position of the sun visor in which the centre line thereof is parallel to the running direction of the vehicle, i.e. the position in which the sun visor is lying against the inside of the corresponding front side window.

### Brief Description of the Drawing

The fixing device for automobile sun visors of the invention is illustrated in the sheet of drawings of the present specification. In said drawings:
Figure 1 is a perspective, part cross section view of the device of the invention.
Figure 2 is a part cross section view of the device of the invention.
Figure 3 is a cross section view on the line III-III of Figure 2.
Figure 4 is a part cross section view of the device of the invention in which the support pin is rotated 90° relative to the position shown in Figure 2.
Figure 5 is a cross section view on the line V-V of Figure 4.

### Detailed Description of the Embodiment

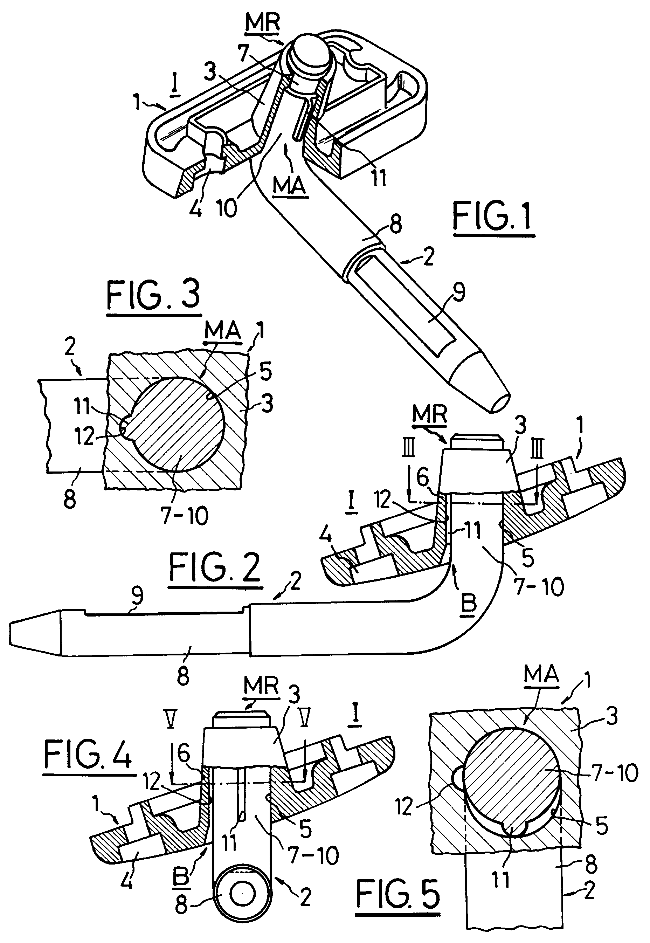

The fixing device for automobile sun visors of the invention described as an exemplary embodiment comprises, as shown in Figure 1, the base body 1 and the support pin 2 which are mutually engageable. Both the base body 1 and the support pin 2 are made from plastics materials of appropriate strength and resilience.

The base body 1 can have any shape appropriate for each particular application. The shape is, in general, determined basically by the internal finish of the vehicle passenger compartment. In this embodiment, the base body 1 is essentially prismatic and on the inner side I thereof, which is the side facing the vehicle structure once the base body 1 is mounted thereon, is provided with the guide extension 3 forming an angle with the said inner side I, as shown in Figure 1.

For greater clarity of description, the anchorage of the base body 1 to the vehicle structure has not been shown in the drawing figures. In this embodiment, the anchorage is achieved with screws mounted through the two through orifices 4 arranged in the respective longitudinal ends of the base body 1, as shown in Figures 1, 2 and 4.

Figures 2 and 4 show how the guide extension 3 is basically frustoconical and has therethrough an axial orifice 5 which, as shown in Figures 2 and 3, is of circular section and is dimensioned so as to define a relatively thin side wall 6 in said guide extension 3.

Figure 1 shows how the support pin 2 is essentially bent and is formed by the vertical arm 7 and the horizontal arm 8. The vertical arm 7 is the shorter one and, as shown in the drawings, is attached to the base body 1. A sun visor which, for the same reasons as given above, has not been shown in the figures, is attached to the horizontal arm 8. In this embodiment of the support pin 2, the horizontal arm 8 comprises a positioning flat 9 shown in Figure 1. Said flat is for more firmly setting the rest position or positions of the sun visor on the said horizontal arm 8.

Figures 2 to 5 show how the vertical arm 7 of the support pin 2 has a cylindrical portion 10 which is dimensioned to mate with the axial orifice 5 of the guide extension 3 of the base body 1 and in which it is snugly lodged. Said cylindrical portion 10 and axial orifice 5 form the coupling means MA of the device of the invention.

To prevent the vertical arm 7 of the support pin 2 from sliding axially downwards under certain conditions, the free ends of the vertical arm 7 and of the guide extension 3 of the base body 1 have respective retaining means MR.

The above described members of the fixing device of the invention are used all or in part by the known embodiments of automobile sun visor supports.

Figures 1, 2 and 4 show how the cylindrical portion 10 of the vertical arm 7 of the support pin 2 is provided with the longitudinal gripping rib 11 which, in this embodiment, once the support pin 2 is engaged with the base body 1, extends to the opening B of the axial orifice 5 of the guide extension 3 of the base body 1.

Figures 2 to 5 show how the axial orifice 5 of the guide extension 3 of the base body 1 is provided with the longitudinal positioning slot 12 which extends from the opening B of the axial orifice 5. Said positioning slot 12 extends coextensively with the gripping rib 11 formed on the cylindrical portion 10 housed in said axial orifice 5. Figures 2 and 3 show how the positioning slot 12 is dimensioned so that the gripping rib 11 may be snugly housed therein.

Operation of the fixing device of the invention is extremely simple and is shown in Figures 2 to 5.

In Figures 2 and 3, the position occupied by the support pin 2 is the position in which the sun visor attached to the horizontal arm 8 of the support pin 2 is lying against the front side window of the vehicle. In this position, the gripping rib 11 of the vertical arm 7 of the support pin 2 is located in the positioning slot 12 of the guide extension 3 of the base body 1. Under these conditions, the rotational torque required to be applied by the user to the sun visor to change the position thereof around the base body 1 must be greater than the resistant rotational torque resulting from the grip of the engagement of the cylindrical portion 10 with the axial orifice 5 and removal of the gripping rib 11 from its housing in the positioning slot 12. In this way, if, under certain conditions such as may be those described hereinabove, the engagement between the cylindrical portion 10 and the axial orifice 5 becomes slack, the joint action of the gripping rib 11 and of the positioning slot 12 prevents the support pin 2 and, consequently, the sun visor, from untimely release from the position selected by the user.

As mentioned above, the position of the gripping rib 11 and of the positioning slot 12 relative to the support pin 2 and the base body 1, respectively, both shown in Figures 2 to 5, are the positions preferably adopted by the fixing device of the invention.

In Figures 4 and 5, the position occupied by the support pin 2 is the one in which the sun visor is disposed transversely to the running direction of the vehicle, i.e. lying against the vehicle windscreen. In this position, the gripping rib 11 causes resilient deformation of the guide extension 3 as shown in Figure 5. As a result of said resilient deformation the gripping action on the cylindrical portion 10 is much greater than the gripping action that said guide extension 3 exerts on the cylindrical portion 10 when the gripping rib 11 is lodged in the positioning slot 12, because of the very resilient reaction of the constituent material of the guide extension 3, as shown in Figures 2 and 3. Under these conditions, the rotational torque required to be applied by the user to the sun visor to change the position thereof around the base body 1 is, in any case, much greater relative to the rotational torque required by the known coupling embodiments between the support pin 2 and the base body 1.

## Claims

1. A fixing device for automobile sun visors comprising a base body (1) and a bent support pin (2) which are mutually engageable through coupling means (MA) and retaining means (MR) with which they are respectively provided, said base body (1) and support pin (2) being made from materials of appropriate strength and resilience and in which:
- the shape and finish of the base body (1) depend on the interior finish of the automobile passenger compartment and it is provided with means (4) for firm attachment thereof to the vehicle structure;
- the vertical (7) and horizontal (8) arms of the support pin (2) are of different length, the vertical arm (7) being shorter and attached to the base body (1);
- the coupling means (MA) for the vertical arm (7) of the support pin (2) to the base body (1) comprises, on the inner surface (I) of the base body (1) which is the surface facing the vehicle structure, a guide extension (3) forming an angle with said surface (I) and which is provided with a circular section axial through orifice (5) and, on the vertical arm (7) of the support pin (2), a cylindrical portion (10) dimensioned to mate with said axial orifice (5), in which it is snugly housed;
- the retaining means (MR) on the vertical arm (7) of the support pin (2) and the base body (1) prevents the vertical arm (7) from coming loose from the base body (1) under normal conditions of use;
and is characterized in that there is, on the cylindrical portion (10) of the support pin (2) vertical arm (7), a longitudinal gripping rib (11) and, in the axial through orifice (5) of the base body (1) guide extension (3), a longitudinal coupling slot (12) in which said gripping rib (11) may be snugly housed.
